(19) Europäisches Patentamt
European Patent Office
Office européen des brevets

(11) **EP 2 542 370 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(21) Anmeldenummer: **11707655.4**

(22) Anmeldetag: **04.03.2011**

(51) Int Cl.:
**B23C 5/06** (2006.01)    **B23C 5/18** (2006.01)

(86) Internationale Anmeldenummer:
**PCT/EP2011/053312**

(87) Internationale Veröffentlichungsnummer:
**WO 2011/107594 (09.09.2011 Gazette 2011/36)**

(54) **STIRNFRÄSER UND DESSEN VERWENDUNG**

FACE MILL AND USE OF THE SAME

FRAISE DE FACE ET L'UTILISATION DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2010 DE 102010000640**

(43) Veröffentlichungstag der Anmeldung:
**09.01.2013 Patentblatt 2013/02**

(73) Patentinhaber: **Gühring OHG
72458 Albstadt (DE)**

(72) Erfinder: **BOZKURT, Lutfi
72474 Winterlingen (DE)**

(74) Vertreter: **Winter, Brandl, Fürniss, Hübner, Röss, Kaiser, Polte - Partnerschaft mbB Patent- und Rechtsanwaltskanzlei Bavariaring 10 80336 München (DE)**

(56) Entgegenhaltungen:
**EP-A1- 1 260 298        WO-A1-98/16341
WO-A1-2005/089991    WO-A1-2008/099984
WO-A1-2009/157850    CH-A5- 686 235
DE-T2- 69 930 449      JP-A- 59 069 208**

## Beschreibung

Die Erfindung betrifft einen Stirnfräser mit mehreren über den Umfang verteilten plattenförmigen Hartstoffschneideinsätzen, gemäß dem Oberbegriff des Anspruchs 1.

Die DE 699 30 449 T2 offenbart einen solchen Stirnfräser.

Derartige Stirnfräser sind häufig als Fräsköpfe ausgebildet, bei denen im Werkzeugträger Schneidplatten, beispielsweise Wendeschneidplatten aus Hartmetall, Keramik (Cermet) oder polykristallinem Diamant (PKD) aufgenommen sind. Herkömmlich werden bei Planfräsköpfen die Schneidplatten so eingesetzt, dass sich ein Einstellwinkel $\kappa_r$ von etwa 75° ergibt, das heißt, dass die Hauptschneidkanten zu der zu bearbeitenden Planfläche in einer die Fräserachse enthaltenden Ebene unter einem Winkel $\kappa_r$ von etwa 75° verlaufen. Die Fräserachse steht dabei senkrecht zur Werkstückoberfläche, und die an der Stirnseite des Werkzeugs liegenden Nebenschneiden erzeugen die zu fertigende Fläche.

Wie andere spanabhebende Werkzeuge unterliegen auch Stirnfräser der eingangs beschriebenen Art einer dynamischen Entwicklung hin zu größeren Schnittgeschwindigkeiten bei gleichzeitiger Anhebung der Standwege, wobei oftmals auch bei sehr großer Zerspanungsleistung eine gute Oberflächenqualität der bearbeiteten Oberfläche sichergestellt werden soll. Dabei kommt der Spanntechnik, mit der ein derartiger Hochleistungs-Fräskopf an die Werkzeugmaschine gekoppelt wird, eine weitere Bedeutung zu. Moderne Hohlschaftkegel (HSK)-Schnittstellen ermöglichen es, Fräsköpfe mit Arbeitsdurchmesser weit über 100 mm derart stabil und mit derartig großer Rundlaufgenauigkeit an die Werkzeugmaschinenspindel zu koppeln, dass sich auch bei Schnittgeschwindigkeiten von über 1000 m/min qualitativ hochwertige Bearbeitungsoberflächen erzielen lassen. Die Spindeldrehzahlen können dabei über 10000 U/min betragen.

Allerdings stellt sich bei Stirnfräsern der eingangs beschriebenen Art bei immer größer werdenden Schnittgeschwindigkeiten das Problem, dass die schlagartig in das Werkstück eintauchende Schneidkante zu einem Schnittkraftvelauf führt, der erhebliche Vibrationen des Fräsers und punktuelle Überbeanspruchungen der Schneideinsätze nach sich ziehen kann. Die Zerspanungsleistung und die Standzeit des Werkzeugs kann deshalb häufig nicht auf einem ausreichenden Niveau gehalten werden.

Der Erfindung liegt deshalb die Aufgabe zu Grunde, einen Stirnfräser, insbesondere einen Fräskopf, gemäß dem Oberbegriff des Anspruchs 1 derart weiterzubilden, dass sich bei hoher Standzeit eine bessere Zerspanungsleistung bei guter zu erreichender Oberflächenqualität realisieren lässt.

Diese Aufgabe wird durch einen Stirnfräser mit den Merkmalen des Anspruchs 1 gelöst.

Der Einstellwinkel $\kappa_r$ wird stark auf einen Wert zwischen 10° und 30°, äußerst bevorzugt zwischen 18° und 22° verkleinert, wobei gleichzeitig die Hauptschneidkante leicht konvex ausgebildet wird. Es hat sich gezeigt, dass sich auf diese Weise die Schnittkraft wesentlich besser verteilen und folglich erheblich reduzieren lässt, wobei sich ein sogenannten "neutraler Schnitt", dass heißt keine Zug- und Druckbelastung am zu bearbeitenden Bauteil ergibt. Durch den veränderten Verlauf der Hauptschneidkante ergibt sich gleichzeitig eine geringere Drehmomentaufnahme an der Spindel, wodurch es gelingt, die zu erzielbaren Schnittgeschwindigkeiten des Fräsers auf bis zu 4000 m/min anzuheben.

Aufgrund der Verlängerung der Hauptschneide ergibt sich der zusätzliche Vorteil, dass die Wärmeentwicklung an den Schneiden verhältnismäßig gering ist, so dass sich das erfindungsgemäße Werkzeug hervorragend für die sogenannte Trockenbearbeitungs(MMS)-Technologie eignet. Durch die Gestaltung des Einstellwinkels $\kappa_r$ auf einen Bereich zwischen 10° und 30° ergibt sich der besondere Effekt, dass der überwiegende Bereich der Hauptschneide als Schruppschneide fungiert, während der radial innen liegende, wesentlich kleinere Bereich als Schlichtschneide arbeitet. Im Bereich der Schlichtschneide ist das Spanvolumen wesentlich kleiner, mit der Folge, dass die dort auftretenden Schnittkräfte reduziert und die erzielbaren Oberflächen mit besserer Güte bearbeitet werden.

Erfindungsgemäß wird dafür gesorgt, dass die Hauptschneidkante über einen kleinen Übergangsradius, der vorzugsweise einen Wert im Bereich zwischen 0,5 und 1,5 mm erhält, in die Nebenschneidkante übergeht. Damit kann die Standzeit des Fräsers weiter angehoben werden. Denn der Übergangsradius liegt auf diese Weise im Zentrum des Schlichtschneidenabschnitts, wodurch dessen Standzeit wesentlich angehoben werden kann. Die Leistungsfähigkeit des Stirnfräsers lässt sich dabei weiter steigern, wenn der axiale Spanwinkel stark positiv gewählt wird, vorzugsweise im Bereich zwischen 20° und 30°, besonders bevorzugt zwischen 23° und 27°. Mit dieser Gestaltung gelingt es, die Wärmeentwicklung weiter zu reduzieren, da die Schneiden sehr positiv liegen. Gleichzeitig wird damit dafür gesorgt, dass der Späneflug außerhalb des Schneidenbereichs liegt.

Über die Wahl des Übergangsradius zwischen der Hauptschneidkante und der Nebenschneidkante wird mit einfachsten Maßnahmen Einfluss auf die Spanbildung und gleichzeitig auf die Oberflächengüte der bearbeiteten Werkstückoberfläche genommen. Je nach Kundenwunsch und je nach den Einsatzbedingungen wird dementsprechend der verwendete Hartstoff-Schneideinsatz mit einem angepassten Übergangsradius ausgestattet, wobei sich mit zunehmendem Wert des Übergangsradius eine zunehmend bessere Oberflächengüte erzielen lässt.

Auch über den Einstellwinkel $\kappa_r$ kann auf die zu erzielende Oberflächengüte wirksam und einfach Einfluss genommen werden, wobei sich mit abnehmendem Einstellwinkel $\kappa_r$ tendenziell eine Verbesserung der Oberflächengüte der bearbeiteten Oberfläche ergibt. Über das Zusammenspiel von Übergangsradius und Einstellwinkel $\kappa_r$ kann also erfindungsgemäß das Werkzeug optimal und nach Kundenwunsch an das jeweils vorliegende Einsatzgebiet, d.h. an die angestrebte Güte der bearbeiteten Werkstückoberfläche, angepasst werden, ohne den Gesamtaufbau des Werkzeugs ändern zu müssen.

Mit der Merkmalskombination des Anspruchs 1 wird somit ein Werkzeug geschaffen, das sich einerseits durch eine verbesserte Zerspanungsleistung auszeichnet, so dass mit Vorschubgeschwindigkeiten von bis zu 40 m/min und Schnittgeschwindigkeiten bis zu 4000 m/min gearbeitet werden kann, insbesondere, wenn Aluminium bzw. Aluminiumlegierungen bearbeitet werden, und das durch einfache Variation von Geometrieparametern dem jeweils gewünschten Einsatzzweck optimal angepasst werden kann. Es hat sich gezeigt, dass der Aufbau des Werkzeugs auch dann beibehalten werden kann, wenn extrem kleine und extrem große Flugkreisdurchmesser vorliegen. Das erfindungsgemäße Werkzeug eignet sich für Flugkreisdurchmesser im Bereich von 10 bis 1400 mm.

Vorteilhafte Ausgestaltungen sind Gegenstand der Unteransprüche.

Es hat sich herausgestellt, dass sich eine besonders wirksame Schnittkraftverringerung bei gleichzeitiger Abnahme der thermischen Beanspruchung der Hauptschneide dann ergibt, wenn der Krümmungsradius der Hauptschneidkante einen Wert annimmt, der im Bereich zwischen 80 und 120 mm, vorzugsweise zwischen 90 und 110 mm liegt. Diese Krümmungsradien haben darüber hinaus den Vorteil, dass sie mit herkömmlichen Maschinen reproduzierbar herstellbar sind, so dass sich an allen Hartstoff-Schneideinsätzen identische Bedingungen ergeben, wodurch ein an allen Schneideinsätzen identischer Verschleiß sichergestellt ist.

Die auf das Werkzeug einwirkenden Schnitt-Reaktionskräfte können weiter vermindert werden, wenn gemäß Anspruch 3 mit einem negativen radialen Spanwinkel gearbeitet wird, der im Bereich zwischen -6° und -10°, vorzugsweise zwischen -7° und -9° liegt. Der Schnitt wird dadurch noch weicher und gleichmäßiger, wodurch die Laufruhe des Werkzeugs weiter verbessert wird.

Bezüglich der Hartstoff-Schneideinsätze besteht ein großer Freiraum hinsichtlich Ausgestaltung und Auswahl des Werkstoffs. Es hat sich jedoch gezeigt, dass sich insbesondere für die Bearbeitung von Aluminium und dessen Legierungen Hartstoff-Schneideinsätze mit einer Schneidplatte aus polykristallinem Diamant oder kubischen Bornitrid (CBN) besonders eignen, um extrem hohe Zerspanungsleistungen, das heißt Vorschubwerte zu erzielen. Selbstverständlich hängt das tatsächliche Maß der Zustellung von der jeweils vorliegenden Werkzeugmaschine und der Spindel ab. Grundsätzlich ist jedoch der Aufbau des erfindungsgemäßen Stirnfräsers in der Lage, die Zerspanungsleistung des Werkzeugs für alle Werkstoffe erheblich zu steigern.

Wenn eine Schneidplatte aus Hartstoff verwendet wird, wird diese vorzugsweise auf einer Schneidenträgerplatte befestigt, wobei die Befestigung entweder über eine Verklebung, eine Verlötung oder eine Verklemmung erfolgt. Es hat sich gezeigt, dass besonders gute Schnittbedingungen dann erzielbar sind, wenn die Schneidenträgerplatte eine Dicke von lediglich von 2,3 bis 2,9 mm und die Schneidplatte aus Hartstoff eine Dicke im Bereich von 0,4 bis 0,6 mm hat.

Grundsätzlich kann der Hartstoff-Schneideinsatz in der Tasche des Fräserkörpers lösbar montiert, beispielsweise verschraubt oder verklemmt sein. Die Leistungsfähigkeit des Werkzeugs wird jedoch vergrößert, wenn der Hartstoff-Schneideinsatz in der Tasche des Schneidenträgers durch Verlötung oder Verklebung sitzt. Denn die Spannuten können auf diese Weise größer ausgebildet werden, was dem Späneabtransport und damit der Zerspanungsleistung weiter zugute kommt.

Es ist jedoch gleichermaßen möglich, den Hartstoff-Schneideinsatz in einer Schneidenkassette aufzunehmen, die dann vorzugsweise einstellbar am Fräserkörper befestigt wird.

Die Standzeit des Fräswerkzeugs kann durch eine geeignete Beschichtung des Hartstoff-Schneideinsatzes verbessert werden, wobei die Art der Beschichtung vorzugsweise in Abhängigkeit von dem zu zerspanenden Material gewählt wird. Vorteilhafte Ausgestaltungen der Beschichtung sind Gegenstand des Anspruchs 10.

Wie eingangs bereits erwähnt, eignet sich das erfindungsgemäße Fräswerkzeug selbst bei größten Zerspanungsleistungen für die sogenannte Trockenbearbeitung. In diesem Fall ist es von Vorteil, dass Fräswerkzeug gemäß Anspruch 11 weiterzubilden. Das aus den Mündungsöffnungen der vorzugsweise innenliegenden Kühlmittelkanäle austretende MMS(Mindermengenschmierung)-Fluid, das beispielsweise von mit feinsten Öltröpfchen versetzter Druckluft gebildet ist, dient zum Einen der Schmierung und der Kühlung der im Eingriff befindlichen Schneiden und gleichzeitig der Kühlung und dem Abtransport des entstehenden Spans. Auf diese Weise kann die Leistungsfähigkeit des Werkzeugs weiter angehoben werden.

Weitere vorteilhafte Ausgestaltungen sind Gegenstand der übrigen Unteransprüche.

Nachstehend werden anhand schematischer Zeichnungen Ausführungsbeispiele der Erfindung näher erläutert. Es zeigen:

Fig. 1 eine perspektivische Ansicht eines Stirnfräsers in der Ausgestaltung als Fräskopf;

Fig. 2 in stark vergrößerter schematischer Ansicht den Blick auf einen Hartstoff-Schneideinsatz mit Blickrichtung senkrecht zur Drehachse des Stirnfräsers;

Fig. 3 eine Ansicht des Hartstoff-Schneideinsatzes gemäß Fig. 2 bei einer Blickrichtung "III" in Fig. 2;

Fig. 4 eine Ansicht des Hartstoff-Schneideinsatzes gemäß Fig. 2 und Fig. 3 bei einer Blickrichtung parallel zur Fräserachse;

Fig. 5 eine Seitenansicht einer weiteren Ausführungsform des Stirnfräsers;

Fig. 6 die Stirnansicht des Stirnfräsers gemäß Fig. 5;

Fig. 7 eine perspektivische Ansicht des Stirnfräsers gemäß Fig. 5 und Fig. 6;

Fig. 8 in vergrößerter Darstellung die Einzelheit "VIII" in Fig. 5;

Fig. 9 in vergrößerter Darstellung die Einzelheit gemäß "IX" in Fig. 5; und

Fig. 10 eine schematische Darstellung zur Verdeutlichung der Lage des Hartstoff-Schneideinsatzes bezüglich der Fräserachse zur Erzielung eines negativen radialen Spanwinkels.

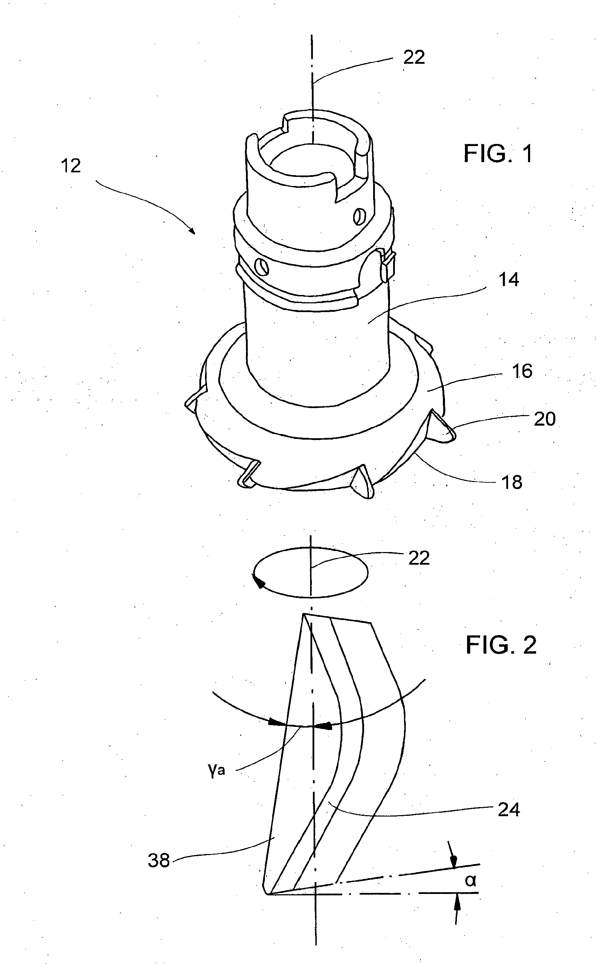

In Fig. 1 ist mit dem Bezugszeichen 12 ein Stirnfräser bezeichnet, dessen zylindrischer Schaft 14 einen Fräskopf 16 trägt. Der Fräskopf 16 nimmt in Taschen 18 jeweils einen Hartstoff-Schneideinsatz 20 auf, wobei die Anordnung so getroffen ist, dass in diesem Fall alle Hartstoff-Schneideinsätze 20 auf demselben Teilkreis bzw. Flugkreis liegen und in einem vorbestimmten Umfangsabstand zueinander stehen. Vorteilhafterweise unterscheiden sich die Umfangsabstände benachbarter Hartstoff-Schneideinsätze 20 voneinander, das heißt die Teilung des Fräswerkzeugs ist ungleich, wodurch der Effekt erzielt wird, dass eine eigenfrequenzbedingte Schwingungsneigung des Werkzeugs verringert ist.

Bei dem Werkzeug handelt es sich um einen sogenannten Planfräskopf, der zum Stirn-Planfräsen eingesetzt wird. Bei derartigen Werkzeugen wird der Durchmesser des Fräskopfs vorzugsweise so festgelegt, dass er dem 1,3-fachen der Breite des zu bearbeitenden Werkstücks entspricht.

Die Besonderheit des Werkzeugs gemäß Fig. 1 besteht darin, dass die Geometrie und die Lage der Hartstoff-Schneideinsätze 20 relativ zur Drehachse 22 des Werkzeugs in besonderer Weise gewählt sind. Dies soll anhand der Figuren 2 bis 4 näher erläutert werden.

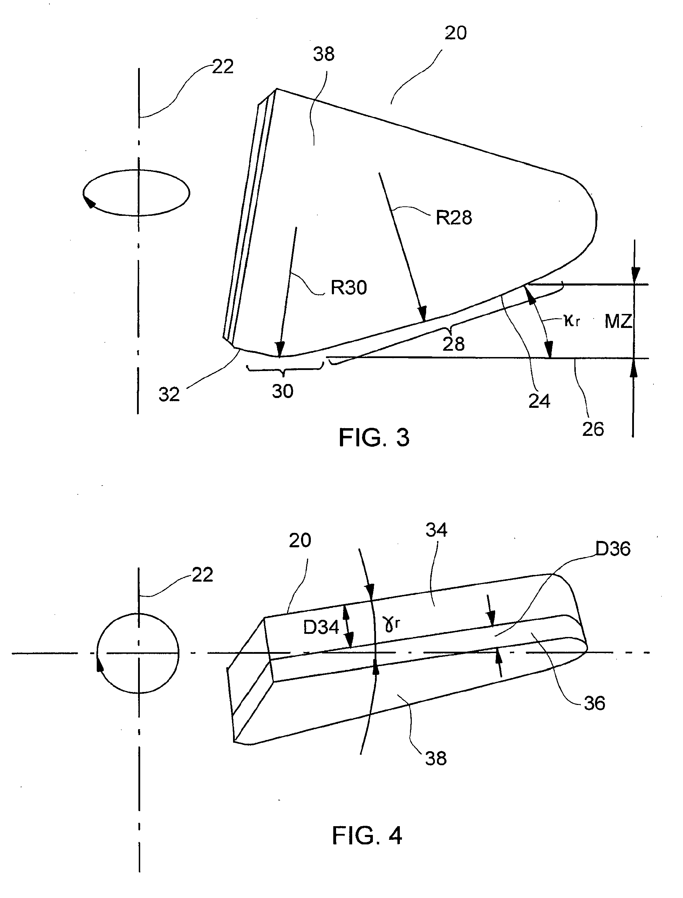

Wie sich am besten aus der Fig. 3 ergibt, ist die Anordnung so getroffen, dass die Hauptschneidkante 24 zu einer auf der Fräserachse 22 senkrecht stehenden Ebene, das heißt zur Arbeitsebene 26 des Fräswerkzeugs unter einem Einstellwinkel $\kappa_r$ verläuft, der im Bereich zwischen 10° und 30°, vorzugsweise zwischen 15° und 25°, äußerst bevorzugt zwischen 18° und 22° liegt. Dieser besonders kleine Einstellwinkel $\kappa_r$ führt dazu, dass die Hauptschneide 24 bei einem vorgegebenen Maß MZ für die Zustellung über eine verhältnismäßig große Länge

$$LE \sim \frac{MZ}{\sin \kappa_r}$$

in Schneideingriff steht. Auf diese Weise ergibt sich ein verhältnismäßig großer Abschnitt der Schruppschneide 28, an den sich ein Schlichtschneidenabschnitt 30 anschließt.

Die Besonderheit der Anordnung besteht nicht nur hinsichtlich der Lage im Raum, sondern auch hinsichtlich der Schneidengeometrie. Wie am Besten aus der Fig. 3 ersichtlich, ist die Hauptschneidkante leicht konvex ausgebildet. Im konkreten Fall folgt die Kontur der Hauptschneidkante 24 zumindest über den größten Erstreckungsbereich einem Kreisbogen mit einem Krümmungsradius R28, der im Bereich zwischen 80 und 120 mm, vorzugsweise zwischen 90 und 110 mm, also beispielsweise bei 100 mm liegt. Die Hauptschneidkante 24 geht in die Nebenschneide 32 über einen kleinen Übergangsradius R30 über, der im Bereich zwischen 0,5 und 1,5 mm liegt, also beispielsweise 1 mm beträgt.

Durch den Übergangsradius R30 zwischen der Hauptschneidkante 24 und der Nebenschneidkante 32 wird Einfluss auf die Spanbildung und gleichzeitig auf die Oberflächengüte der bearbeiteten Werkstückoberfläche genommen. Je , nach Kundenwunsch und je nach den Einsatzbedingungen wird dementsprechend der verwendete Hartstoff-Schneideinsatz mit einem angepassten Übergangsradius ausgestattet, wobei sich mit zunehmendem Wert des Übergangsradius eine zunehmend bessere Oberflächengüte erzielen lässt.

Auch über den Einstellwinkel $\kappa_r$ kann auf die zu erzielende Oberflächengüte wirksam und einfach Einfluss genommen werden, wobei sich mit abnehmendem Einstellwinkel $\kappa_r$ und damit mit einer Verkleinerung des Maßes MZ (siehe Figur 3) tendenziell eine Verbesserung der Oberflächengüte der bearbeiteten Oberfläche ergibt. Über das Zusammenspiel von Übergangsradius und Einstellwinkel $\kappa_r$ kann also erfindungsgemäß das Werkzeug optimal und nach Kundenwunsch an das jeweils vorliegende Einsatzgebiet, d.h. an die angestrebte Güte der bearbeiteten Werkstückoberfläche, angepasst werden, ohne den Gesamtaufbau des Werkzeugs ändern zu müssen.

Bei dem Hartstoff-Schneideinsatz der gezeigten ersten Ausführungsform handelt es sich um eine Ausführung, bei der eine Schneidenträgerplatte 34 vollflächig eine Hartstoff-Schneidplatte 36 trägt. Die Hartstoff-Schneidplatte 36 besteht beispielsweise aus polykristallinem Diamant (PKD) oder kubischen Bornitrid (CBN). Es ist jedoch auch möglich, andere Hartstoffe wie VHM oder Cermet-Werkstoffe einzusetzen. Derartige Hartstoff-Schneidplatten haben vorzugsweise eine Dicke von 0,5 mm.

Die Schneidenträgerplatte 34 besteht aus einem Werkstoff, der derart gewählt ist, dass er dem Hartstoff-Schneideinsatz 20 eine ausreichend hohe Formstabilität verleiht. Vorzugsweise besteht die Schneidenträgerplatte 34 aus Vollhartmetall oder einem Cermet- oder Keramik-Werkstoff. Sie kann aber auch anderem Werkstoff, selbst aus Aluminium oder auch aus kohlenfaserverstärktem Kunststoff oder glasfaserverstärktem Kunststoff bestehen. Wichtig ist, dass sich die Schneidenträgerplatte 34 möglichst vollflächig an einer Stützfläche der Tasche 18 des Fräskopf 16 abstützt, damit die Schnittreaktionskräfte zuverlässig und ohne Materialüberbeanspruchungen aufgefangen werden können.

Aus den Figuren 2 und 4 ist die Lage des Hartstoff-Schneideinsatzes 20 im Raum erkennbar. Man erkennt aus der Darstellung gemäß Fig. 2, dass der Hartstoff-Schneideinsatz 20 so angeordnet, dass die mit 38 bezeichnete Spanfläche so angeordnet ist, dass sich im Bereich der Hauptschneide 24 ein axialer Spanwinkel $\gamma_a$ im Bereich zwischen 20 und 30°, vorzugsweise zwischen 23 und 27° ergibt.

Mit dem Bezugzeichen $\alpha$ ist ein Freiwinkel bezeichnet, der für die Haupt- und Nebenschneide positiv sein soll und beispielsweise im Bereich von 8° liegt.

Mit dieser Geometrie und Konfiguration des Hartstoff-Schneideinsatzes ergeben sich stark verbesserte Schnittbedingungen bei der Hochgeschwindigkeits-Zerspanung von verschiedensten Werkstoffen, insbesondere jedoch bei der Zerspanung von Aluminium bzw. Aluminiumlegierungen. Aufgrund des verhältnismäßig großen axialen Spanwinkels $\gamma_a$ in Verbindung mit der konvexen Hauptschneide 24, die mit der Arbeitsebene 26 einen sehr kleinen Einstellwinkel $\kappa_r$ einschließt, ergeben sich selbst bei großer Zerspanungsleistung sehr gute Schnittbedingungen mit einer sehr geringen Wärmeentwicklung bei gutem Späneflug, der außerhalb des Schneidenbereichs liegt.

Die in radialer Richtung verlängerte Hauptschneide 24 arbeitet dabei als Schruppschneide, während der sich daran anschließende radial innenliegende Schneidenabschnitt 30 als Schlichtschneide arbeitet. Durch die verbesserten Schnittbedingungen mit stark vergleichmäßigter Schnittkraft baut sich an den Schneideinsätzen beim Eintritt in das zu zerspanende Material keine so große Kraftspitze mehr auf, wie dies bei herkömmlichen Fräswerkzeugen vergleichbarer Bauart der Fall ist. Das Werkzeug arbeitet somit selbst bei vergrößerter Zerspanungsleistung ruhiger, und die herzustellende Oberfläche kann mit verbesserter Güte hergestellt werden.

Der vorstehend beschriebene Effekt wird dann noch verbessert, wenn der Hartstoff-Schneideinsatz 20 - wie in Figur 4 dargestellt - derart zu einer die Drehachse 22 enthaltenden Ebene angestellt ist, dass sich ein negativer radialer Spanwinkel $\gamma_r$ ergibt. Dieser radiale Spanwinkel liegt beispielsweise im Bereich zwischen -6° und -10°, vorzugsweise zwischen -7° und -9°. Mit dieser Gestaltung wird der von der Fräserschneide vorzunehmende Schnitt noch weicher. Mit anderen Worten, es ergibt sich dadurch ein sogenannter "neutraler Schnitt", bei dem Zug-/Druckbeanspruchungen am zu zerspanenden Bauteil ausgeschlossen werden. Gleichzeitig ergibt sich eine weiter reduzierte Drehmomentaufnahme an der Spindel und aufgrund einer weiteren Verlängerung der Hauptschneide 24 eine noch geringere Wärmeentwicklung.

Es hat sich gezeigt, dass mit einem Stirnfräser, der mit Hartstoff-Schneideinsätzen der Geometrie und Lageanordnung nach den Figuren 2 bis 4 ausgestattet ist, Schnittgeschwindigkeiten bis zu 4000m/min realisiert werden können, wobei die Spindeldrehzahl in Bereichen über 10000 U/min liegen kann. Der Vorschub kann dabei in den Bereich von 40m/min verlegt werden, insbesondere wenn beispielsweise Aluminium und Aluminiumlegierungen bearbeitet werden.

Diese vorstehend beschriebene Ausgestaltung und Anordnung der Hartstoff-Schneideinsätze am Stirnfräser lässt sich dann wirtschaftlich besonders effektiv nutzen, wenn der Fräskopf mit einem ausreichend stabilen Schaft 14 kombiniert wird. Dieser Schaft 14 ist vorzugsweise über eine HSK-Schnittstelle an die Maschinenspindel bzw. an einem weiteren Systemmodul angekoppelt, wodurch es gelingt, selbst bei höchsten Drehzahlen im vorstehend angegebenen Bereich ausreichend hohe Rundlaufgenauigkeiten und Schwingungsstabilität sicher zu stellen.

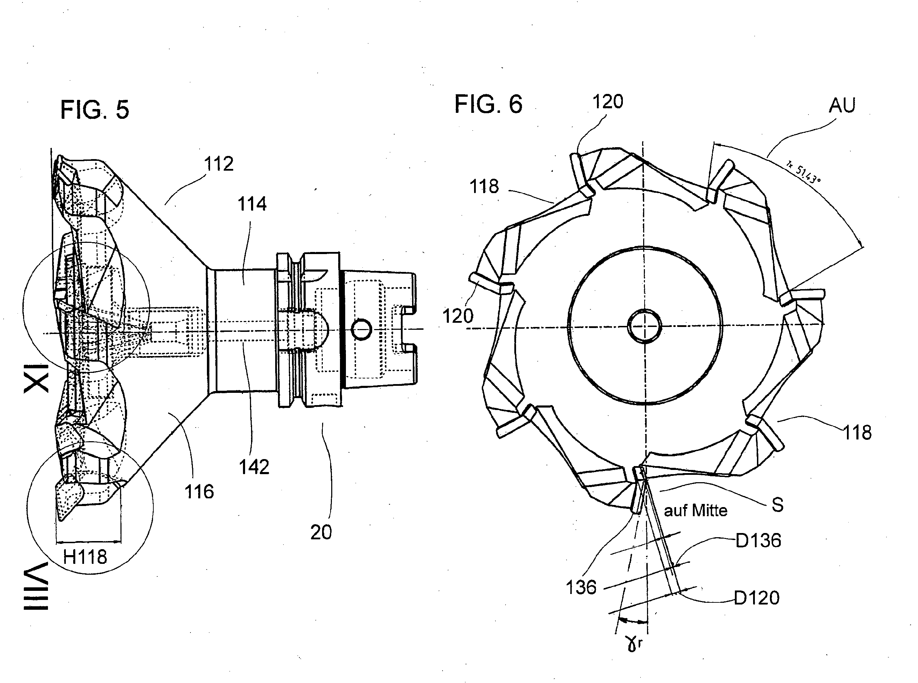

Anhand der Figuren 1 bis 4 ist eine Ausführungsform des Stirnfräsers beschrieben worden, bei dem lediglich die Kernelemente der Gestaltung hervorgehoben sind. Im Folgenden wird anhand der Figuren 5 bis 10 eine getestete weitere Ausführungsform des Stirnfräsers mit maßstabsgetreuer Wiedergabe der Einzelheiten erläutert. Um Wiederholungen zu vermeiden, werden bei der Beschreibung dieser Ausführungsform für diejenigen Komponenten, die den Bauteilen des oben beschriebenen Ausführungsformen entsprechen, ähnliche Bezugszeichen verwendet, denen jedoch eine "1" vorangestellt ist.

Der mit 112 bezeichnete Stirnfräser hat einen Schaft 114 mit einer HSK-Schnittstelle 140. Der mit 116 bezeichnete Fräskopf ist ebenso wie der Schaft 114 aus Stahl hergestellt. Mit gestrichelten Linien 142 ist eine innenliegende Kanalanordnung zur Versorgung der Fräserschneiden mit Kühl-/Schmiermittel angedeutet. Vorzugsweise ist diese Innenkanalanordnung so getroffen, dass jeder Schneide ein gesonderter Schmier-/Kühlmittelkanal zugeordnet ist. Vorzugsweise liegen also die nicht näher dargestellten Mündungsöffnungen der innenliegenden Kühlkanäle 142 in den jeweiligen Taschen 118 so, dass das aus den Mündungsöffnungen austretende Kühl-/Schmiermittel besonders wirksam zur Wärmeabfuhr und/oder zum Abtransport der Späne genutzt werden kann. Bei dem Kühl-/Schiermittel kann es sich um flüssiges Schmiermittel handeln, jedoch auch um sogenanntes MMS-Fluid, das bei der Trockenbearbeitung bzw. bei der Minimalmengenschmierung (MMS-Technologie) verwendet wird. Ein solches MMS-Fluid ist beispielsweise Druckluft unter einem Druck von bis zu 50 bar, die mit feinsten Öltröpfchen versetzt ist.

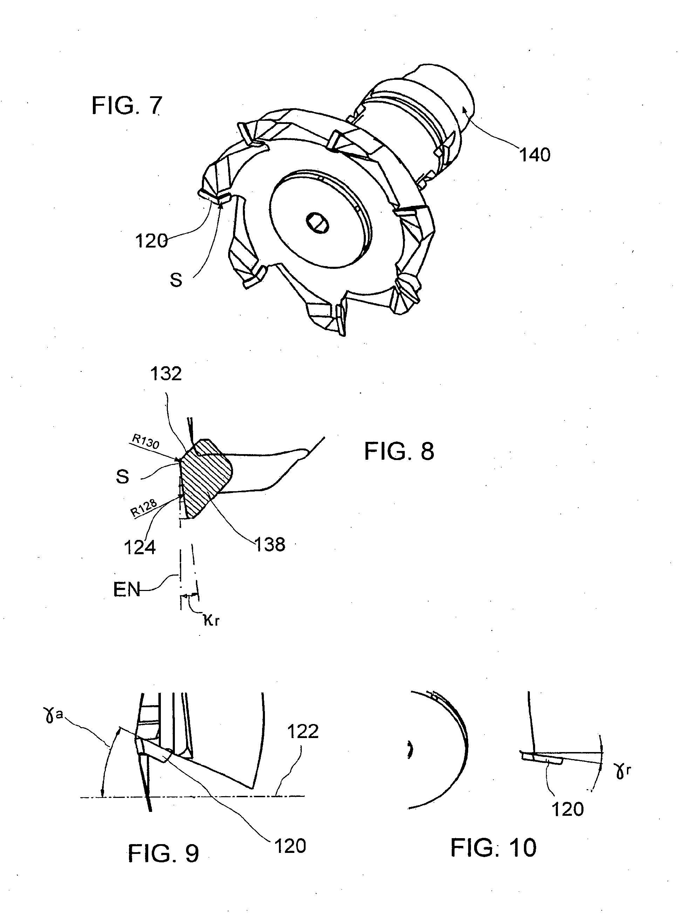

Wie sich am besten aus der Figur 6 und der Figur 7 ergibt, ist der Fräskopf 116 mit sieben Hartstoff-Schneideinsätzen 120 bestückt, die in gleichmäßigem Umfangsabstand AU von 51,43° zueinander stehen. Die Hartstoff-Schneideinsätze können ebenso aufgebaut sein, wie dies unter Bezugnahme auf die Figuren 1 bis 4 beschrieben wurde. Die Taschen 118 sind so ausgebildet, dass sich eine Geradnutung des Fräskopfs 116 ergibt. Mit H 118 ist die axiale Erstreckung einer Tasche 118 bezeichnet. Sie liegt beispielsweise bei einem Fräskopf mit einem Durchmesser von etwa 130 mm bei etwa 25 bis 30 mm.

Die Hartstoff-Schneideinsätze 120 stützen sich vollflächig an einer nicht näher bezeichneten Stützfläche der dem betreffenden Schneideinsatz zugeordneten Tasche 118 im Fräskopf 116 ab. Die Dicke D120 des Hartstoff-Schneideeinsatzes 120 liegt beispielsweise bei 3 mm, während die Hartstoffauflage, die beispielsweise aus PKD oder CBN bestehen kann, eine Stärke von 0,5 mm hat. Diese Dicke ist mit D136 bezeichnet.

Mit dem Bezugszeichen S ist der Schneidenübergang zwischen der Hauptschneidkante 124 und der Nebenschneide 132 bezeichnet (siehe Figur 8), wobei in diesem Abschnitt wieder ein kleiner Übergangsradius R130 im Bereich zwischen 0,5 und 1,5 mm ausgebildet ist. Im Bereich dieses Übergangsradius R130 liegt die Schtichtschneide, während die Schruppschneide von der Hauptschneidkante 124. gebildet wird. Dort folgt die Hauptschneidkante einem Krümmungsradius R128, der wieder Werte im Bereich zwischen 80 und 120 mm vorzugsweise zwischen 90 und 110 mm annimmt.

Erneut ist die Anordnung so getroffen, dass sich bei einer vollflächigen Abstützung der Hartstoff-Schneideinsätze 120 an entsprechenden Stützflächen der im Fräskopf 116 ausgebildeten Taschen an der Hauptschneide ein negativer radialer Spanwinkel $\gamma_r$ (siehe Figur 6 und Figur 10) von etwa 8° ergibt. Die Darstellung nach Figur 10 zeigt die Ansicht in Blickrichtung parallel zur Ausrichtung der Spanfläche 138, die somit in Figur 10 als Linie erscheint. Bei dieser Ansicht beträgt bei der gezeigten Ausführungsform der Winkel $\gamma_r$ 8°.

Wie sich aus der Einzelheit gemäß Figur 9 ergibt, ist die in der Tasche 118 ausgebildete Stützfläche für den Hartstoff-Schneideinsatz 120 derart positioniert, dass die Spanfläche 138 zur Achse 122 des Fräsers um einen Winkel von etwa 25° geneigt ist.

Der Hartstoff-Schneideinsatz 120 ist somit derart angeordnet, dass sich ein verhältnismäßig großer axialer Spanwinkel $\gamma_a$ im Bereich von etwa 25° und ein radialer Spanwinklel $\gamma_r$ um 8° ergibt.

Wie sich aus der Darstellung nach Figur 5 und 8 ergibt, ist die Hauptschneide 124 zu einer auf der Achse 122 des Fräswerkzeugs senkrecht stehenden Ebene EN, d.h. zur Arbeitsebene unter einem Winkel $\kappa_r$ angestellt, der wiederum sehr klein ist und im Bereich zwischen 10 und 30° liegt. Mit dieser Ausgestaltung ergibt sich folgende Funktionsweise:

Die Hauptschneiden laufen mit dem Scheitelpunkt S zwischen Hauptschneide 124 und Nebenschneide 132 dem Schnitt voran. Aufgrund der Neigung der Hauptschneide 124 zur Arbeitsebene EN unter dem kleinen Winkel $\kappa_r$ verbunden mit der axialen Anstellung des Hartstoff-Schneideinsatzes unter dem relativ großen axialen Spanwinkel $\gamma_a$, in Kombination mit der konvexen Ausgestaltung der Hauptschneide 124 in Verbindung mit der Ausbildung eines negativen radialen Spanwinkels $\gamma_r$ ergeben sich besonders geringe Schnittkräfte und gleichzeitig Schnittbedingungen, die selbst bei großen Schnittgeschwindigkeiten von bis zu 4000 m/min zu beherrschbaren thermischen Beanspruchungen der Schneide führen. Durch die offene Gestaltung der Taschen 118 in Verbindung mit geeigneter Lage und Ausrichtung der Mündungsöffnungen für die innenliegenden Kühl-/Schmiermittelkanäle kann die thermische Beanspruchung der Schneiden weiter reduziert werden, wodurch die Schnittgeschwindigkeiten und die Zerspanungsleistung des Werkzeugs weiter angehoben werden können.

Ein Werkzeug, das gemäß der vorstehenden Beschreibung aufgebaut und gestaltet wird, kann unterschiedlichste Werkzeugdurchmesser aufweisen, ohne den grundsätzlichen Aufbau zu ändern. Es wurden Werkzeuge mit Flugkreisdurchmessern, d.h. Durchmessern, auf denen die Hauptschneide liegt, im Bereich zwischen 10 und 1400 mm hergestellt und erfolgreich für die Bearbeitung von Oberflächen unterschiedlichster Oberflächengüte eingesetzt.

Selbstverständlich sind Abweichungen von den gezeigten Ausführungsbeispielen möglich, ohne den Grundgedanken der Erfindung zu verlassen. So kann beispielsweise mit anderen Hartstoffen gearbeitet werden, wie zum Beispiel Vollhartmetall oder Cermet-Werkstoffen, und gleiches gilt für die Wahl des Werkstoffs für die Schneidenträgerplatte.

Die Schneidenträgerplatte kann aus der Gruppe der Stahl- ,Hartmetall-, Aluminium-, CFK- und GFK-Werkstoffe ausgewählt sein. Auch ist die Dicke nicht auf ein Maß um die 2,5 mm beschränkt. Sie kann in Abhängigkeit von der Stärke der Hartstoff-Schneidplatte variieren und ausgewählt werden.

Die Hartstoff-Schneidplatte muss auch nicht notwendigerweise die gesamte Schneidenträgerplatte abdecken. Es ist gleichermaßen möglich, mit einem Schneidplatten-Einsatz zu arbeiten, der sich lediglich im Bereich der Haupt- und/oder der Nebenschneide erstreckt. Auch kann die Geometrie der Hartstoff-Schneidplatte modifiziert sein, beispielsweise derart geformt, dass sich eine Spanbrecherfunktion erfüllen lässt.

Es ist gleichermaßen möglich, die Hartstoff-Schneideinsätze zumindest abschnittsweise mit einer Verschleiß mindernden Beschichtung zu versehen. Diese Beschichtung kann beispielsweise von einer Hartstoffbeschichtung auf der Basis von TiN, TiAlN, AlTiN, AlCrN und/oder Al$_2$O$_3$ gebildet sein. Diese Beschichtung kann als Einzel-, als Komposit- oder als Viellagenschicht ausgebildet sein. Es ist auch möglich mit einer harten amorphen Kohlenstoffschicht, das heißt einer sogenannten DLC-Schicht gemäß VDI-Richtlinien VDI3824 Teil 1-4 und VDI-Richtlinie 2840:2004 zu arbeiten. Es ist gleichermaßen möglich, eine weiche Schutzschicht vorzusehen, wobei diese von einer weichen WC/C oder einer MoS$_2$-Schicht gebildet sein kann.

Anstelle der direkten Eingliederung der Hartstoff-Schneideinsätze in Taschen des Fräskopf können diese auch in Kassetten montiert sein, die dann ihrerseits am Fräskopf, beispielsweise fest oder einstellbar, montiert sind.

Das hauptsächliche Anwendungsgebiet des erfindungsgemäßen Fräswerkzeugs ist die Schrupp- und Schlichtbearbeitung von Aluminium beziehungsweise Aluminiumlegierungen, wobei Schnittgeschwindigkeiten bis zu 4000 mm/min realisierbar sind.

Bei dem zweiten Ausführungsbeispiel ist die Anordnung so getroffen, dass die Hartstoff-Schneideinsätze 120 mit gleicher Teilung über den Umfang verteilt sind. Es ist gleichermaßen möglich, eine ungleiche Teilung vorzunehmen, das heißt den gegenseitigen Umfangsabstand AU benachbarter Hartstoff-Schneideinsätze unterschiedlich zu gestalten, um Eigenschwindungen des Werkzeugs weitergehend zu unterdrücken.

**Patentansprüche**

1. Stirnfräser mit mehreren über den Umfang verteilten plattenförmigen Hartstoff-Schneideinsätzen (20; 120), die auf einem Teilkreis liegend in Taschen (18; 118) eines Schneidenträgers (16; 116) aufgenommen sind und eine Hauptschneidkante (24; 124) haben, die zur Arbeitsebene (26;EN) des Fräsers unter einem Einstellwinkel ($\kappa_r$) angestellt ist, der kleiner als 90° ist, wobei:

   - der Einstellwinkel ($\kappa_r$) im Bereich zwischen 10 und 30° liegt, vorzugsweise zwischen 15 und 25°, äußerst bevorzugt zwischen 18 und 22 ° liegt; und
   - die Hauptschneidkante (24; 124) leicht konvex ausgebildet ist, **dadurch gekennzeichnet, dass**
   - die Hauptschneidkante (24; 124) über einen kleinen Übergangsradius (R30; R130) mit einem Wert im Bereich zwischen 0,5 und 1,5 mm in die Nebenschneidkante (32; 132) übergeht; und
   - der axiale Spanwinkel ($\gamma_a$) der Hauptschneide (24; 124) im Bereich zwischen 20 und 30° liegt, vorzugsweise zwischen 23 und 27°.

2. Stirnfräser nach Anspruch 1, **dadurch gekennzeichnet, dass** die Hauptschneidkante (24; 124) im Wesentlichen einem Radius (R28; R128) folgt, der im Bereich zwischen 80 und 120 mm, vorzugsweise zwischen 90 und 110 mm liegt.

3. Stirnfräser nach Anspruch 1 oder 2, **dadurch gekennzeichnet, dass** der radiale Spanwinkel ($\gamma_r$) der Hauptschneide (24; 124) im Bereich zwischen - 6 und -10°, vorzugsweise zwischen -7 und -9 ° liegt.

4. Stirnfräser nach einem der Ansprüche 1 bis 3, **dadurch gekennzeichnet, dass** der Freiwinkel ($\alpha$) im Bereich zwischen 8 und 12 ° liegt.

5. Stirnfräser nach einem der Ansprüche 1 bis 4, **dadurch gekennzeichnet, dass** der Hartstoff-Schneideinsatz (20; 120) eine zumindest die Schneiden (24, 32; 124, 132) erfassende Schneidplatte (36; 136) aus Polykristallinem Diamant (PKD) oder Kubischem Bornitrid (CBN) hat, wobei die Dicke (D36; D136) der Schneidplatte im Bereich von 0,4 bis 0,6 mm liegt.

6. Stirnfräser nach Anspruch 5, **dadurch gekennzeichnet, dass** die Schneidplatte (36; 136) auf einer Schneidenträgerplatte (34; 134) befestigt ist, deren Material aus der Gruppe der Stahl-, Hartmetall-, Aluminium-, CFK- und GFK-Werkstoffe ausgewählt ist und die vorzugsweise eine Dicke (D34; D134) von 2,3 bis 2,9 mm hat.

7. Stirnfräser nach Anspruch 6, **dadurch gekennzeichnet, dass** die Schneidplatte (36; 136) mit der Schneidenträgerplatte (34; 134) verklebt oder verlötet ist.

8. Stirnfräser nach einem der Ansprüche 1 bis 7, **dadurch gekennzeichnet, dass** der Hartstoff-Schneideinsatz (20; 120) mit der Tasche (18; 118) des Schneidenträgers (16; 116) verlötet, verklemmt oder verklebt ist.

9. Stirnfräser nach einem der Ansprüche 1 bis 8, **dadurch gekennzeichnet, dass** die Hartstoff-Schneideinsätze (20; 120) in unregelmäßigem Umfangsabstand (AU) zueinander angeordnet sind.

10. Stirnfräser nach einem der Ansprüche 1 bis 9, **dadurch gekennzeichnet, dass** die Hartstoff-Schneideinsätze (20; 120) zumindest abschnittsweise mit einer verschleißmindernden Beschichtung, wie z.B. einer Hartstoffbeschichtung auf der Basis vonTiN, TiAlN, AlTiN, AlCrN, Al$_2$O$_3$ als Einzel-, Composite- oder Viellagenschicht, einer harten amorphen Kohlenstoffschicht (DLC-Schicht) mit geringem Reibungskoeffizienten (VDI-Richtlinien VDI 3824 Teil 1-4 und VDI 2840:2004), oder einer weichen Schutzschicht, wie z.B. einer WC/C- oder MoS2-Schicht, versehen sind.

**11.** Stirnfräser nach einem der Ansprüche 1 bis 10, **gekennzeichnet durch** innenliegende Kühlmittelkanäle (142), die auf die Hauptschneiden (24; 124) gerichtete Mündungsöffnungen haben.

**12.** Verwendung eines Stirnfräsers nach einem der Ansprüche 1 bis 11 zur Schrupp- und Schlichtbearbeitung von Aluminiumwerkstoffen.

**13.** Verwendung eines Stirnfräsers nach einem der Ansprüche 1 bis 11 für Schnittgeschwindigkeiten von bis zu 4000 m/min.

**Claims**

**1.** Face milling cutter having a plurality of plate-like hard material cutting inserts (20; 120) which are distributed over the periphery and which are received in a state located on a pitch circle in pockets (18; 118) of a blade carrier (16; 116) and which have a main cutting edge (24; 124) which is positioned with respect to the operating plane (26;EN) of the milling cutter at a positioning angle ($\kappa_r$) which is less than 90°, wherein:

the positioning angle ($\kappa_r$) is in the range between 10 and 30°, preferably between 15 and 25°, in an extremely preferred manner between 18 and 22°;

- the main cutting edge (24; 124) is constructed in a slightly convex manner, **characterised in that**
- the main cutting edge (24; 124) via a small transition radius (R30; R130) having a value in the range between 0.5 and 1.5 mm merges into the auxiliary cutting edge (32; 132); and
- the axial angle of rake ($\gamma_a$) of the main blade (24; 124) is in the range between 20 and 30°, preferably between 23 and 27°.

**2.** Face milling cutter according to claim 1, **characterised in that** the main cutting edge (24; 124) substantially follows a radius (R28; R128) which is in the range between 80 and 120 mm, preferably between 90 and 110 mm.

**3.** Face milling cutter according to claim 1 or claim 2, **characterised in that** the radial angle of rake ($\gamma_r$) of the main blade (24; 124) is in the range between -6 and -10°, preferably between -7 and -9°.

**4.** Face milling cutter according to any one of claims 1 to 3, **characterised in that** the clearance angle ($\alpha$) is in the range between 8 and 12°.

**5.** Face milling cutter according to any one of claims 1 to 4, **characterised in that** the hard material cutting insert (20; 120) has a cutting plate (36; 136) of polycrystalline diamond (PCD) or cubic boron nitride (CBN) which includes at least the blades (24, 32; 124, 132), the thickness (D36; D136) of the cutting plate being in the range from 0.4 to 0.6 mm.

**6.** Face milling cutter according to claim 5, **characterised in that** the cutting plate (36; 136) is secured to a blade carrier plate (34; 134) whose material is selected from the group of steel, hard metal, aluminium, CFRP and GRP materials and which preferably has a thickness (D34; D134) of from 2.3 to 2.9 mm.

**7.** Face milling cutter according to claim 6, **characterised in that** the cutting plate (36; 136) is adhesively bonded or soldered to the blade carrier plate (34; 134).

**8.** Face milling cutter according to any one of claims 1 to 7, **characterised in that** the hard material cutting insert (20; 120) is soldered, clamped or adhesively bonded to the pocket (18; 118) of the blade carrier (16; 116).

**9.** Face milling cutter according to any one of claims 1 to 8, **characterised in that** the hard material cutting inserts (20; 120) are arranged with an irregular peripheral spacing (AU) from each other.

**10.** Face milling cutter according to any one of claims 1 to 9, **characterised in that** the hard material cutting inserts (20; 120) are at least partially provided with a wear-reducing coating, such as, for example, a hard material coating based on TiN, TiAlN, AlTiN, AlCrN, $Al_2O_3$ as a single, composite or multi-layer coating, a hard amorphous carbon layer (DLC layer) having a low friction coefficient (VDI guidelines VDI 3824 Part 1-4 and VDI 2840:2004), or a soft protective layer, such as, for example, a WC/C or MoS2 coating.

**11.** Face milling cutter according to any one of claims 1 to 10, **characterised by** internal cooling medium channels (142) which have discharge openings which are directed towards the main blades (24; 124).

**12.** Use of a face milling cutter according to any one of claims 1 to 11 for roughing and smoothing processing of aluminium materials.

**13.** Use of a face milling cutter according to any one of claims 1 to 11 for cutting speeds of up to 4000 rpm.

## Revendications

1. Fraise en bout pourvue de plusieurs inserts de coupe en matière dure (20 ; 120) répartis sur sa périphérie, lesquels sont logés dans des poches (18 ; 118) d'un support de plaquettes (16 ; 116) disposées sur un cercle primitif et présentent une arête de coupe principale (24 ; 124) qui forme avec le plan de travail (26 ; EN) de la fraise un angle d'attaque ($\kappa_r$) inférieur à 90°, où

   - l'angle d'attaque ($\kappa_r$) est compris entre 10 et 30°, préférentiellement entre 15 et 25° et tout particulièrement entre 18 et 22° ; et
   - l'arête de coupe principale (24 ; 124) est prévue légèrement convexe, **caractérisée en ce que**
   - l'arête de coupe principale (24 ; 124) va vers l'arête de coupe secondaire (32 ; 132) en formant un petit arrondi de transition (R30 ; R130) avec une valeur comprise entre 0,5 et 1,5 mm ; et
   - l'angle de coupe axial ($\gamma_a$) de l'arête de coupe principale (24 ; 124) est compris entre 20 et 30°, préférentiellement entre 23 et 27°.

2. Fraise en bout selon la revendication 1, **caractérisée en ce que** l'arête de coupe principale (24 ; 124) forme sensiblement un arrondi (R28 ; R128) compris entre 80 et 120 mm, préférentiellement entre 90 et 110 mm.

3. Fraise en bout selon la revendication 1 ou 2, **caractérisée en ce que** l'angle de coupe radial ($\gamma_r$) de l'arête de coupe principale (24 ; 124) est compris entre -6 et -10°, préférentiellement entre -7 et -9°.

4. Fraise en bout selon l'une des revendications 1 à 3, **caractérisée en ce que** l'angle de dépouille ($\alpha$) est compris entre 8 et 12°.

5. Fraise en bout selon l'une des revendications 1 à 4, **caractérisée en ce que** l'insert de coupe en matière dure (20 ; 120) comporte une plaquette de coupe (36 ; 136) en diamant polycristallin (PKD) ou en nitrure de bore cubique (CBN) comprenant au moins les arêtes de coupe (24, 32 ; 124, 132), l'épaisseur (D36 ; D136) de la plaquette de coupe étant comprise entre 0,4 à 0,6 mm.

6. Fraise en bout selon la revendication 5, **caractérisée en ce que** la plaquette de coupe (36 ; 136) est fixée sur une plaque de support (34 ; 134) de plaquette, dont le matériau est sélectionné dans le groupe composé d'acier, de métal dur, d'aluminium, de matériaux CFK et GFK, et qui a préférentiellement une épaisseur (D34 ; D134) comprise entre 2,3 et 2,9 mm.

7. Fraise en bout selon la revendication 6, **caractérisée en ce que** la plaquette de coupe (36 ; 136) est collée ou brasée sur la plaque de support (34 ; 134) de plaquette.

8. Fraise en bout selon l'une des revendications 1 à 7, **caractérisée en ce que** l'insert de coupe en matière dure (20 ; 120) est brasé, serré ou collé dans la poche (18 ; 118) du support de plaquette (16 ; 116).

9. Fraise en bout selon l'une des revendications 1 à 8, **caractérisée en ce que** les inserts de coupe en matière dure (20 ; 120) sont irrégulièrement espacés entre eux (AU) sur la périphérie.

10. Fraise en bout selon l'une des revendications 1 à 9, **caractérisée en ce que** les inserts de coupe en matière dure (20 ; 120) sont au moins partiellement pourvus d'un revêtement réducteur d'usure, tel qu'un revêtement de matière dure à base de TiN, TiAlN, AlTiN, AlCrN, $Al_2O_3$ en tant que couche simple, composite ou stratifiée, d'une couche dure de carbone amorphe (couche DLC) à faible coefficient de friction (directives VDI 3824 parties 1-4 et VDI 2840:2004), ou d'une couche protectrice tendre, telle qu'une couche WC/C ou MoS2.

11. Fraise en bout selon l'une des revendications 1 à 10, **caractérisée par** des canaux de refroidissement intérieurs (142), présentant des orifices débouchant sur les arêtes de coupe principales (24 ; 124).

12. Utilisation d'une fraise en bout selon l'une des revendications 1 à 11 pour l'usinage d'ébauche et de finition de matériaux aluminium.

13. Utilisation d'une fraise en bout selon l'une des revendications selon l'une des revendications 1 à 11 avec des vitesses de coupe jusqu'à 4000 m/min.

FIG. 1

12

22

14

16

20

18

FIG. 2

22

γa

24

38

α

FIG. 3

FIG. 4

FIG. 5

112

114

142

116

20

XI

VIII

H118

FIG. 6

120

118

120

AU

7x 51,43°

S

auf Mitte

D136

136

D120

γr

EP 2 542 370 B1

FIG. 7

140

120

S

132

R130

S

R128

124

138

FIG. 8

EN

Kr

γa

122

120

FIG. 9

γr

120

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69930449 T2